# EUROPEAN PATENT APPLICATION

(11) **EP 4 656 434 A1**
(43) Date of publication of application: **03.12.2025**
(21) Application number: 25179568.8
(22) Date of filing: 28.05.2025
(51) Int. Cl.: B60K 15/07, F17C 13/08

(54) **TRUCK COMPRISING A PRESSURE VESSEL SUSPENSION ARRANGEMENT**

(30) Priority: 30.05.2024 NL 2037819
(71) Applicant: DAF Trucks N.V., 5643 TW Eindhoven (NL)
(72) Inventor: VAN DER KNAAP, Albertus Clemens Maria, 5643 TW Eindhoven (NL); SEGERS, Frank Henri, 5643 TW Eindhoven (NL); HAFAKKER, Chantal, 5643 TW Eindhoven (NL); Shah Wali, ABDULGHANI, 5643 TW Eindhoven (NL); PERINI, Gustavo Pertile, 5643 TW Eindhoven (NL)
(74) Representative: V.O.

(57) **Abstract**

A truck comprising a suspension arrangement for suspending an elongate pressure vessel to the chassis. The suspension arrangement comprises a first and second neck mount. The second neck mount is formed by a flex plate assembly including a vessel mount that is movably coupled to a chassis mount by at least one flex plate, which has a flexibility in an out-of-plane direction and a rigidity in an in-plane direction. The first neck mount is arranged for constraining translations and allowing rotations of the first axial end of the elongate pressure vessel with respect to the chassis.

## Description

The invention relates to a truck comprising a chassis that includes a pair of longitudinal chassis members that extend between a front axle and a rear axle of the truck, and a neck mount suspension arrangement for suspending an elongate pressure vessel at its axial ends only to the chassis.

In Fuel Cell Electric Vehicles (FCEV), the fuel cell unit that generates electric power which is fed to an electro-mechanic motor that drives the wheels may be supplied with a fuel, such as hydrogen, which is stored in pressurized fuel tanks mounted on board of the vehicle. Alternatively, in Hydrogen Internal Combustion Engine vehicles (H2-ICE) the hydrogen fuel is burnt in the combustion chambers with pistons that move up and down, directly driving the wheels via the engine's central output shaft. The same Hydrogen Storage System (HSS) comprising pressurized fuel tanks mounted on board of the vehicle may be needed in these H2-ICE applications. Such pressurized fuel tanks may for example be mounted on a lateral side of the chassis, and/or between the cabin and the trailer.

To avoid rupture of the tank, it is recommended to avoid high peak forces being exerted on the chassis mounted tanks. For example, high (radial) forces acting on the relatively weak boss ends of the tank may cause breaking out of the tank's (carbon fibre based) encapsulation material that maintains the shape of the pressurized fuel tank. For this reason, most tank suppliers advise to mount the tank to the chassis by a set of straps that clamp the tank around its robust cylindrical belly, the so-called "strap mounting", advantageously avoiding a collision load path via the relatively vulnerable metal boss end inserts in the spherical axial ends of the hydrogen vessels in case of a side impact crash from other vehicles. Apart from these crash impact, or misuse, related peak forces acting in the boss ends also normal use neck mount forces can be a concern in this sense, specifically when heavy large volume fuel tanks as typically needed for once-a-day refueling concept, e.g. comprising up to 70-90 kg of pressurized hydrogen (via a combination of 4 to 5 tanks) to reach a driving range of 80 km or more, are being applied. The gravimetric static and dynamic reaction forces in these discrete distanced fixation points can rise up to considerable high values when the truck is operated at high driving speeds on a rough road surface (e.g. Pavé, potholes, sleeping policeman, etc.)

However, the downside of such a strap mounting is that the tanks are mounted in an over-constrained fashion. That is, radial expansion of the tank ("breathing"), e.g. under impact of varying internal pressure, is constrained by the strap mounting, as well as torsional flex modes imposed on the strap mounting fixation by the deformable chassis ladder frame, which is relatively weak in comparison to the stiff cylindrical structure of the carbon fiber fuel tank. Hence, during normal driving and operating conditions of the truck, such an over-constrained strap mounting may create internal stresses or friction between the tank and the mounts, which can lead to damage and may even cause the cylindrical tanks to slowly crawl away in longitudinal direction as a result of rotational micro-motions (like pulling a cork out of wine bottle with a corkscrew) that are continuously induced by small chassis torsional deformation angles (related to driving over road irregularities) of the fairly weak ladder frame as typically applied in commercial vehicles. A further disadvantage of strap mounting is that this fixation means consumes precious radial space that is limited by road clearance restraints and maximum chassis height. This reduces the maximum diameter of the pressurized tanks that can be installed at the sides of the chassis and thus less hydrogen can be stored in these strap mounted tanks, negatively affecting the driving range of these hydrogen vehicles.

To avoid these problems, it is known to suspend the tanks using a "neck mounting" arrangement in which the pressure vessel is mounted only at its axial ends, thus without using any further mounting elements on the cylindrical body of the tank.

However, high pressure tanks may have varying dimensions (diameter and length), e.g. due to manufacturing tolerances as well as expansion and contraction of the pressure tank as a function of pressure. Furthermore, chassis deformations due to dynamic behavior of the truck may cause misalignments between the neck mounts and the chassis, mainly rotation angles in the neck mounts. Hence, apart from static variations in tank dimension, e.g. related to tank production and in-vehicle assembly tolerances and expansion as function of internal tank pressure (0 to 900 bar), also dynamic misalignments resulting from chassis and cabin back frame deformations, need to be absorbed by the tank fixation system.

These dimensional variations and misalignments need to be absorbed by the fixation system to the chassis without "torturing" the neck mounts and/or the relatively vulnerable boss ends of the tank, to prevent fatigue and damage to the system. In addition to these aspects the suspension arrangement needs to meet the applicable crash impact safety requirements to avoid hazardous situations in case of a collision of the truck. In particular, the fuel tanks need to stay attached to the vehicle structure and no leakage of hydrogen is allowed after such a crash impact misuse event.

### SUMMARY

It is an object of the present invention to provide an improved neck mounting arrangement for suspending elongate pressure vessels, e.g. fuel tanks for storing hydrogen at pressure levels up to 900 bar, on board of a truck. Therefore, aspects of the invention relate to a truck as defined in the appended claims. The truck comprises a chassis that includes a pair of longitudinal chassis members that extend between a front axle and a rear axle of the truck, and a suspension arrangement for suspending an elongate pressure vessel to the chassis. The suspension arrangement comprises a first neck mount that is fixedly connected to the chassis and arranged for mounting to a first axial end of the elongate pressure vessel, and a second neck mount that is movably connected to the chassis at a distance from the first neck mount, and arranged for mounting to a second axial end of the elongate pressure vessel.

The second neck mount is formed by a flex plate assembly comprising a chassis mount fixated to the chassis, and a vessel mount arranged for fixating to the second axial end of the elongate pressure vessel. The vessel mount is movably coupled to the chassis mount by at least one flex plate.

The at least one flex plate has a flexibility, e.g. is bendable, in an out-of-plane direction for allowing an out-of-plane translation and tilting, preferably in one or more perpendicular directions, of the vessel mount with respect to the chassis mount, and a stiffness, e.g. rigidity, in at least two in-plane directions for constraining in-plane translations of the vessel mount with respect to the chassis mount, and a rotation about an axial direction of the elongate pressure vessel. Preferably, the at least one flex plate has a higher stiffness in the at least two in-plane directions than in the out-of-plane direction, preferably by at least a factor 50, more preferably by at least a factor 100, e.g. by a factor of 100-500, or even larger.

The first neck mount is arranged for constraining translations and allowing rotations of the first axial end of the elongate pressure vessel with respect to the chassis. Preferably, when the elongate pressure vessel is mounted, the first neck mount constrains all translations, i.e. in any direction, of the first axial end with respect to the chassis, and allows rotations of the first axial end about any axis.

Preferably, the first neck mount comprises a ball joint, e.g. a spherical bearing, for constraining the translations while allowing the rotations. Alternatively, the first neck mount may comprise a rubber or rubber-like bushing, e.g. made of an elastomer. This provides a compact reliable solution with high stiffness and high strength. Alternatively, the first neck mount can be formed by a combination of mounting elements, e.g. a cardanic coupling with a rotatable sleeve, or any other type of mounting arrangement that constrains translations and allows rotations of the first axial end of the elongate pressure vessel with respect to the chassis. Alternatively, or additionally, the first neck mount may comprise a bracket that extends from the chassis and that is arranged for mounting the first axial end of the elongate pressure vessel at a distance from the chassis, e.g. at a lateral offset from the chassis. Such a bracket may in itself have a stiffness for constraining translations, and a flexibility for allowing rotations of the first axial end with respect to the chassis.

Thus, in general, the first neck mount is arranged for constraining translational degrees of freedom of the first neck mount such that the first neck mount is restricted to translate in any direction, e.g. the mounting is rigid in three orthogonal axes of translation. Conversely, the first axial end is relatively free to rotate in any direction, e.g. with reduced resistance, either via well designed compliance characteristics in the neck mount bracket assembly or via application of discrete rotation devices like a ball joint, elastomeric bushing, rotational sleeve or any combination thereof.

On the other side of the elongate pressure vessel, the flexibility of the at least one flex plate allows an out-of-plane translation, e.g. in the axial direction of the pressure vessel, and tilting of the vessel mount, e.g. about at least two axes orthogonal to the axial direction. The stiffness of the at least one flex plate constrains translations in at least two in-plane directions of the vessel mount with respect to the chassis mount, i.e. provides a rigidity that prevents movement in said at least two directions. Furthermore, the at least one flex plate constrains a rotation of the axial end about the axial direction of the elongate pressure vessel.

In other words, the suspension arrangement is arranged for suspending an elongate pressure vessel only at its axial ends in a non-overconstrained fashion, i.e. in that the degrees of freedom of the elongate pressure vessel are completely constrained in a statically determinate (isostatic) fashion by the combination of a flex plate assembly at the second neck mount and a complementary first neck mount setup, e.g. based on a ball joint or elastomeric bushing connection as discrete rotation attachment device. The at least one flex plate acts as a suspension element that absorbs all relative displacement between the first and second neck mount, thereby protecting the vessel's axial ends and the chassis members against high (parasitic) loads or peak stresses. In particular, the at least one flex plate allows displacement of the vessel mount relative to the chassis mount in the axial direction of the elongate pressure vessel, as well as tilting movements of the vessel mount relative to the chassis mount, i.e. rotation in two cardanic degrees of freedom orthogonal to the axial direction of the vessel.

Known neck mounting arrangements are generally over-constrained, i.e. statically indeterminate, in that there is a possibility of self-stress (stress in the absence of an external load) in the structure that may be induced by mechanical or thermal action. Practically, a structure is called 'statically over-determined' or 'over-constrained' when it comprises more mechanical constraints - like walls, brackets, clamped fixations or rotational sleeves- than absolutely necessary for stability. While the effect of internal stress build up may be small in case only axial expansion/contraction of the tank is considered, dynamic behavior of the chassis and mounting frame during driving may have a larger effect on an over-constrained tank suspension, specifically with regards to durability, e.g. wear over lifetime.

To address this issue, the present invention provides a statically determinate structure that minimizes self-stress, i.e. internal forces, in both the suspension structure as well as the suspended vessel. In the present invention this is achieved by suspending the second axial end of the elongate pressure vessel with the at least one flex plate, and suspending the first axial end with the first neck mount, e.g. comprising or formed by a ball joint. The thus formed combination creates a statically determinate structure.

Hence, the suspension arrangement of the present invention minimizes internal stresses that are induced in the pressure vessel and/or the suspension arrangement itself, e.g. due to deformation of the pressure vessel, the suspension arrangement, or the chassis, in a low cost and low weight solution.

For example, the suspension arrangement is able to allow axial expansion and contraction of the elongate pressure vessel caused by pressure or temperature variations, without generating internal stresses. Also, the suspension arrangement allows deformations of the first and second neck mounts with respect to each other, and with respect to the chassis, e.g. caused by dynamic behavior of the truck. Such deformations may cause misalignments which in a conventional over-constrained structure would lead to internal stresses. The statically determinate suspension arrangement of the present invention is able to accommodate such deformations and misalignments to protect the vulnerable axial ends of the elongate pressure vessel against force overloads. Also the chassis is protected vice versa against local stress concentrations in the near vicinity of the connected first and second neck mounts.

Having a statically determinate suspension structure also facilitates the assembly process, since the compliancy of the structure allows connecting parts that deviate from their nominal dimensions and geometry, e.g. due to manufacturing tolerances, without introducing internal stresses and without reworking or realigning parts of the suspension structure.

Also, the present invention provides for a space saving neck mount suspension arrangement, due to their relatively compact size. Accordingly pressurized vessels can be suspended with maximum fuel storage capacity on board of the truck by optimally using the available packaging space in the truck architecture. Overall, this contributes to a weight optimized vehicle integration and fuel storage volume optimized design of the suspension arrangement in the truck.

In order to cope with axial expansion and contraction of the elongate pressure vessel and with manufacturing tolerances of the pressure vessel, the at least one flex plate may allow an out-of-plane translation with a range of movement of at least 15 millimeter, preferably at least 20 millimeter. The high pressure tanks can have varying dimensions, e.g. in diameter and in axial length. Manufacturing tolerances may account for axial length variations up to 30 millimeter. Furthermore, axial expansion and contraction of the pressure vessel, e.g. due to internal pressure increase or decrease between 0 and 900 bar, may be up to 20 millimeter or even more. Hence, the at least one flex plate to chassis mount assembly may be arranged for allowing an out-of-plane translation up to 40 or 50 millimeters.

Material stress levels can become too high when the at least one flex plate is relatively thick, although this thickness may be needed to fixate the pressure vessel (in the in-plane direction). Stresses in the flex plate material are caused by static bending deformation, superimposed with dynamic in-plane fixation forces. Furthermore, the in-plane stiffness may be reduced when the flex plate is bent, by the deformed S-shape of flex plate. To address these issues, the flex plate assembly may comprises at least two flex plates extending separately between the chassis mount and the vessel mount. For example, the flex plate assembly comprises three, four, five, or six flex plates, or more. The more and thus the thinner the flex plates, the lower the material stress. In this way, the out-of-plane flexibility and in-plane stiffness of the flex plate assembly can be tuned individually and independently provided by multiple flex plates, e.g. to reinforce the assembly in some directions and to reduce the stress per flex plate.

For example, the at least two flex plates may be stacked or spaced apart in the out-of-plane direction. In other words, when the elongate pressure vessel is mounted in the suspension arrangement, the at least two flex plates are arranged behind each other in the axial direction of the elongate pressure vessel. The at least two flex plates may be stacked directly onto each other, or may be spaced apart from each other in the axial direction, e.g. by spacers between the flex plates. In this embodiment, the at least two flex plates are only connected to each other at the vessel mount and at the chassis mount, so that over a distance between the vessel mount and chassis mount the flex plates are detached, e.g. free standing, from each other. Hence, during an out-of-plane deflection, the detached sections of the at least two flex plates are free to move or slide with respect to each other. In this latter embodiment, the flex plates sliding over each other may even provide for deliberately designed friction between the co-sliding plates to dampen resonance vibrations in the overall tank to chassis suspension system. During an out-of-plane deflection, the resulting bending stress is inversely proportional to the second moment of area of the flex plate(s). For a rectangular cross section, the second moment of inertia is proportional to the thickness of the flex plate to the third power. By using multiple free standing flex plates instead of a single flex plate, multiple thinner flex plates can be used. For example, in case of two flex plates, the thickness of each individual plate can be reduced by a factor two compared to a given thickness of the single flex plate. In case of three, four or five flex plates, the individual thicknesses can be reduced by a factor three, four, or five. The result is a reduced bending stress in the flex plates overall, thereby providing an increased flexibility in the axial direction without reducing the in-plane stiffness and strength of the assembly.

The at least two flex plates may have equal and uniform thicknesses with respect to each other. In order to provide a certain stiffness and strength in the in-plane direction, the at least two flex plates may need to form a combined total thickness of material in the axial direction. Preferably, the individual thicknesses of each flex plate are equal, so that stresses are equally distributed over the at least two flex plates. For example, a total thickness of 12 millimeters may be formed by a stack of eight flex plates, each flex plate having an individual thickness of 1.5 millimeter.

Preferably the at least two flex plates are identical with respect to each other, in that each flex plate is of the same design, size, shape and material.

Nonetheless, the at least two flex plates can be oriented at an angle about the axial direction with respect to each other. For example, in case of two flex plates, one of the flex plates may be designed and oriented for providing stiffness in a first in-plane direction while being flexible in a second in-plane direction, and the other flex plate may be designed and oriented for providing stiffness in the second in-plane direction while being flexible in the first in-plane direction. The same principle applies in case of more than two flex plates. In order to provide a stiffness that constrains in-plane translations of the second axial end of the elongate pressure vessel with respect to the chassis, the angle between the first and second in-plane directions may be between 30 and 150 degrees, preferably between 60 and 120 degrees, more preferably between 80 and 100 degrees. The first and second in-plane directions may both be perpendicular to the axial direction of the elongate pressure vessel, e.g. at an angle of 60-120 degrees with respect to the axial direction, preferably at an angle between 80-100 degrees.

In order to increase the flexibility of the at least one flex plate, e.g. for allowing an out-of-plane translation and tilting of the vessel mount with respect to the chassis mount in the out-of-plane direction, the at least one flex plate may comprise one or more flexible hinges and interconnected beams defined by a cutout pattern in the flex plate. Preferably, the cutout pattern does not reduce the in-plate stiffness of the at least one flex plate. This stiffness can e.g. be maintained by aligning a hinge axis of each flexible hinge with the first and second in-plane stiffness direction described previously in the present disclosure. Preferably, the interconnected beams each have a length-to-width ratio larger than 4:1, preferably larger than 10:1, to optimize the in-plane rigidity with respect to the out-of-plane flexibility.

In some embodiments, the chassis mount comprises an adjustment mechanism, arranged for adjusting a distance between the second neck mount and the first neck mount in the axial direction of the elongate pressure vessel, and provided between the flex plate assembly and the chassis for adjustably mounting the flex plate assembly to the chassis. In this way, a neutral position of the flex plate assembly can be defined and tuned. The neutral position can e.g. be set so that when a mounted elongate pressure vessel is fully pressurized, the flex plate assembly is in a first deformed position in which the vessel mount is on a first side of the chassis mount as seen in the axial direction, while in a fully deflated state of the elongate pressure vessel, the flex plate assembly is in a second deformed position in which the vessel mount is on a second side of the chassis mount, opposite to the first side. Preferably, the neutral position is located centrally between the first and second deformed position, e.g. such that a distance between the neutral position and the first position is equal to a distance between the neutral position and the second position. The adjustment mechanism can e.g. comprise one or more longitudinal adjustment slots, or slotted holes, in the chassis mount and/or the chassis, which allow the chassis mount to be positioned with respect to the chassis before attachment thereto. The chassis mount can e.g. be bolted to the chassis by bolts extending through the one or more longitudinal adjustment slots. The one or more longitudinal adjustment slots are elongate instead of circular, so that when the bolt connection is loose the slots can move back and forth relative to the bolts, to increase or decrease the distance between the first and second mount. Primarily the longitudinal adjustment slots may be needed to compensate for static tank production and in-vehicle assembly tolerances, more specifically, to be able to adjust the tank fixation system for different neck mount to neck mount length variations relative the chassis structure sided chassis mounts.

Alternatively, or additionally, the adjustment mechanism may comprise a movable stage that is movable in the axial direction of the elongate pressure vessel, e.g. by means of a lead screw, e.g. second bolts placed in axial direction, or electromechanical actuator. Defining the neutral position can be facilitated by using an assembly aid, or in other words a mounting tool. Such an assembly aid can e.g. have a thickness that corresponds with a distance between the neutral position and the first/second deformed positions. In a first step by placing the mounting aid between the chassis mount and the flex plate, and subsequently using the adjustment mechanism to adjust the distance between the second neck mount and the first neck mount via fixation of the longitudinal slots with its corresponding first bolts, the second neck mount and the corresponding chassis mount can already be positioned to the chassis at a pre-set distance between the flex plate and the chassis mount whilst the flex plate is in a non-bent neutral flat state before the elongate pressure vessel is mounted and pressurized. In a second step, the assembly aid is subsequently removed between the flex plate and chassis mount, and the second bolts are tightened in axial direction to the chassis mount, effectively forcing the flex plate in its S-shape bent second position, corresponding to an empty or non-pressurized tank condition.

In some embodiments, the vessel mount of the flex plate assembly is arranged for coupling to a boss end extending from the second axial end of the elongate pressure vessel, wherein the vessel mount comprises an alignment surface configured to align with an outer contour of the boss end, and a mounting surface configured to abut an axial end face of the boss end. The alignment surface may be formed by a cutout in the vessel mount, e.g. a hole or slot or spline or fork, having a shape and size that corresponds with a shape and size of the boss end. For example, a cylindrical boss end may be aligned with the flex plate assembly by means of a circular cutout. The mounting surface can e.g. be formed by a flange, or radial protrusion or splines on the vessel mount. When mounted, the boss end may extend through the vessel mount, or may axially abut an end face of the vessel mount. In some embodiments, the boss end, when mounted, extends completely through the vessel mount, and a valve unit is mounted to the axial end of the boss end on a side of the flex plate assembly facing away from the elongate pressure vessel. Accordingly, provisions are in place for both aligning as well as mounting the elongate pressure vessel to the flex plate assembly.

In other or further embodiments, the vessel mount comprises a reinforcement plate fixated to and extending across a side of the at least one flex plate that faces the second neck mount, wherein the reinforcement plate is arranged for locally reinforcing the at least one flex plate at or near the coupling to the elongate pressure vessel. The reinforcement plate, e.g. underlay plate, effectively transfers suspensions forces between the flex plate assembly and the elongate pressure vessel while distributing stresses over an increased area of the at least one flex plate, to prevent local stress concentrations and to reduce the maximum stress level in the at least one flex plate.

In some embodiments, the at least one flex plate radially extends between the vessel mount and the chassis mount, wherein the vessel mount is provided at a central portion of the at least one flex plate, and wherein the chassis mount is at least provided at two opposing edges of the at least one flex plate. In other words, the chassis mount may at least partially surround the vessel mount. In a specific variant of these embodiments, the vessel mount is concentric with respect to the chassis mount. In this way, the flex plate assembly may have a relatively large degree of symmetry, to optimize the in-plane stiffness and strength of the flex plate assembly and the stress distribution in the at least one flex plate.

Alternatively, the flex plate assembly may have an asymmetrical or unilateral design. For example, the at least one flex plate may unilaterally extend between the chassis mount and the vessel mount, wherein the chassis mount is provided at a first edge of the flex plate, and wherein the vessel mount is provided at a second edge of the flex plate opposite the first edge, e.g. to optimize the out-of-plane flexibility of the flex plate assembly and/or providing for more advantageous packaging and weight aspects related to a one-side fixation of the flex plate to the supportive chassis structure that is aligned in parallel to the elongate pressure vessel. When bent out-of-plane, the at least one flex plate forms an S-shape as seen from aside. Such an offset flex plate configuration results in a simpler and lighter construction. Strength and stress analysis simulation research shows that a flexibility, e.g. bending compliance, can be obtained to cope with tank elongations, as well as an in-plane stiffness and strength to keep the vessel in position, e.g. during braking/accelerating and driving over an uneven road surface. At the same time, the offset flex plate variant is able to absorb parasitic cardanic angles at the neck mount whilst keeping the material stress to acceptable low levels. An offset flex plate can e.g. have a rectangular or triangular shape, or any other shape.

The suspension arrangement of the present invention can be provided at various locations on the truck, and in different configurations. For example, in some embodiments the first and second neck mounts are part of a vessel mount structure that extends from a top side of the chassis between a cabin and a trailer of the truck, wherein the first and second neck mount are arranged for suspending the elongate pressure vessel in a substantially upright orientation. This provides a so-called cabin backpack configuration for suspending elongate pressure vessels to the truck in the space behind the cabin and in front of a trailer of the truck. In this configuration, the ball joint may be mounted in a top portion of the vessel mount structure while the flex plate assembly is mounted at a bottom portion of the vessel mount structure. The higher position of the ball joint ensures that the elongate pressure vessel is rigidly suspended from the ball joint in a stable downward orientation, in which it is only free to swing and rotate. Alternatively, the flex plate assembly may be mounted at the top portion while the ball joint is in the bottom portion of the vessel mount structure.

Here, the first and second neck mount may optionally be tilted with respect to the top side of the chassis for suspending the elongate pressure vessel at a forward inclination in the driving direction of the truck, in order to make sufficient room for movement of the front end of a trailer with respect to the cabin, e.g. in the pitch and yaw degree of freedom of the trailer, and to prevent collision of the trailer into the vessel mount structure and/or elongate pressure vessel(s).

Alternatively, or additionally, the first and second neck mount may extend from a lateral side of the chassis between the front and rear axle of the truck, wherein the first and second neck mount are arranged for suspending the elongate pressure vessel to the chassis in a substantially level orientation. This may be applied in a so-called chassis tank configuration in which one or more elongate pressure vessels are suspended on the lateral side(s) of the truck, e.g. below the cabin and/or trailer.

In some embodiments, the first neck mount comprises, or is formed by a ball joint that comprises an outer ring mounted to the chassis, and an inner ring that is rotatable in three orthogonal degrees of freedom with respect to the outer ring and that is mountable to a boss end extending from the first axial end of the elongate pressure vessel. The outer ring may optionally be mounted in a cavity of a ball joint housing that form-fittingly encloses the outer ring of the ball joint, wherein a first wall section of the cavity is formed by a first part of the ball joint housing, and wherein a second wall section of the cavity is formed by a second part of the ball joint housing.

To ensure that, besides providing a statically determinate structure, the suspension arrangement is also safe during a crash, i.e. that an impact load on the elongate pressure vessel does not result in rupture or excessive damage to the vessel's axial ends, the suspension arrangement may be configured in that, at the second neck mount, the at least one flex plate comprises two branches that unilaterally extend between the chassis mount and the vessel mount, and the first neck mount comprises a kinematic parallelogram mechanism or structure, wherein the parallelogram mechanism has a relatively high stiffness in an out-of-plane direction for constraining an out-of-plane translation with respect to the chassis, and wherein the parallelogram mechanism is collapsible, i.e. deformable in a predefined trajectory when a collapse threshold force is applied on the parallelogram mechanism, in an in-plane direction for absorbing an impact force on the elongate pressure vessel and guiding the vessel towards one or more chassis sided end stops over a pre-defined trajectory.

In some embodiments, the suspension arrangement has an initial position in which a distance between the first and second neck mount is adapted to match an axial length of an elongate pressure vessel with an internal pressure that is about atmospheric, wherein, in the initial position, the flex plate assembly exerts a tensile force on the second axial end when said atmospheric elongate pressure vessel is suspended in the suspension arrangement. Accordingly, when the suspended elongate pressure vessel is filled with fuel and pressurized up to a (maximum) working pressure, e.g. up to 700 - 900 bar, the axial extension of the elongate pressure vessel may cause the tensile force to reduce to zero when the flex plate bending passes through its neutral flat shaped position at approximately half of the maximum working pressure, and the flex plate assembly may instead exert a compression force on the second axial end of the pressure vessel when the maximum working pressure is reached. Setting the distance between the first and second neck mount in the initial position can e.g. be performed with the help of an assembly aid between the one or more flex plates and the chassis. In this way, the maximum deflection of the flex plate assembly can be minimized, in order to reduce peak bending stresses in the flex plate(s).

### BRIEF DESCRIPTION OF THE DRAWINGS

The invention will be further elucidated in the figures:
FIG. 1 illustrates an embodiment of a truck comprising a suspension arrangement for suspending elongate pressure vessels;
FIG. 2 illustrates an embodiment of the suspension arrangement comprising a flex plate assembly and a ball joint;
FIGs. 3A-E illustrate several variants of the flex plate assembly;
FIGs. 4A-D illustrate an embodiment of a multilayer flex plate assembly;
FIGs. 5A-B illustrate another or further embodiment of the flex plate assembly;
FIGs. 6A-B illustrate yet another or further embodiment of the flex plate assembly for suspending and mounting of a chassis sided tank with the help of an assembly aid;
FIG. 7 illustrates an embodiment detail of the second neck mount of the suspension arrangement;
FIG. 8 illustrates an embodiment detail of the first neck mount of the suspension arrangement;
FIG. 9 illustrates another or further embodiment of the first neck mount;
FIG. 10 illustrates another embodiment of the suspension arrangement for suspending and mounting of upstanding tanks behind the cabin.

### DETAILED DESCRIPTION

Aspects of the invention relate to a truck, comprising a chassis that includes a pair of longitudinal chassis members that extend between a front axle and a rear axle of the truck, and a suspension arrangement for suspending an elongate pressure vessel to the chassis. The suspension arrangement comprises a first neck mount, fixedly connected to the chassis and arranged for mounting to a first axial end of the elongate pressure vessel, and a second neck mount that is movably connected to the chassis at a distance from the first neck mount, and arranged for mounting to a second axial end of the elongate pressure vessel.

The second neck mount is formed by a flex plate assembly comprising a chassis mount fixated to the chassis and a vessel mount arranged for fixating to the second axial end of the elongate pressure vessel. The vessel mount is movably coupled to the chassis mount by at least one flex plate. The at least one flex plate has a flexibility in an out-of-plane direction for allowing an out-of-plane translation and tilting of the vessel mount with respect to the chassis mount, and a rigidity in at least two in-plane directions for constraining in-plane translations of the vessel mount with respect to the chassis mount, and a rotation about an axial direction of the elongate pressure vessel. In this way, when suspended, the elongate pressure vessel is able to axially expand and contract without inducing large internal stresses in the elongate pressure vessel, the suspension arrangement, and/or the chassis. At the same time, the second axial end of the elongate pressure vessel is constrained by the flex plate assembly to prevent any in-plane movements and rotation.

In preferred embodiments, the first neck mount is arranged for constraining translations and allowing rotations of the first axial end of the elongate pressure vessel with respect to the chassis, to suspend the elongate pressure vessel in a statically determinate, non-overconstrained fashion. For this purpose the first neck mount may e.g. comprise a ball joint or a flexible bushing.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

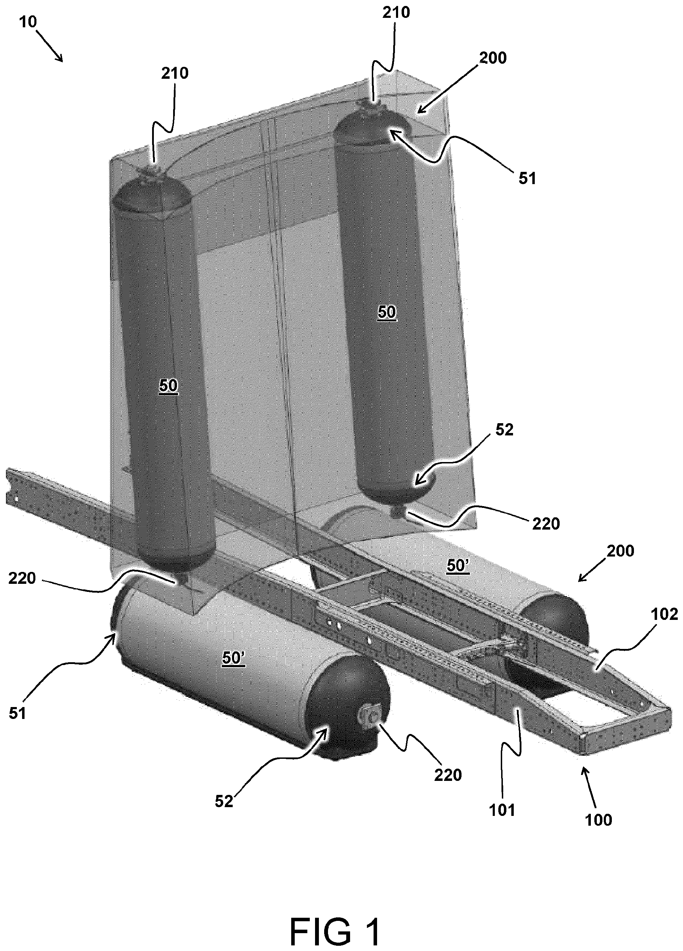

FIG 1 illustrates an embodiment of a truck 10, comprising a chassis 100 that includes a pair of longitudinal chassis members 101, 102 that extend between a front axle and a rear axle of the truck 10. A suspension arrangement 200 suspends a number of elongate pressure vessels 50 to the chassis 100. The elongate pressure vessels 50 are arranged for storing pressurized fuel, such as hydrogen, on board the truck 10.

In the embodiment illustrated in FIG. 1, a first vessel mount structure extends from a top side of the chassis 100 between a cabin and a trailer of the truck, e.g. in a so called "cabin backpack" configuration. An example of a vessel mount structure for such a "cabin backpack" configuration is disclosed in EP4045351.

The suspension arrangement 200 comprises one or more first neck mounts 210 and second neck mounts 220. The first neck mount 210 is fixedly connected to the chassis 100 and arranged for mounting to a first axial end 51 of the elongate pressure vessel 50. The second neck mount 220 is movably connected to the chassis 100 at a distance from the first neck mount 210, and arranged for mounting to a second axial end 52 of the elongate pressure vessel 50. As illustrated, the first and second neck mounts 210, 220 may be arranged for suspending the elongate pressure vessel 50 in a substantially upright orientation. To form a vessel mount structure with a wide base relative to a narrow top, the first and second neck mount 210, 220 may be tilted with respect to the top side of the chassis 100 for suspending the elongate pressure vessel 50 at a forward inclination in the driving direction of the truck. Said tilt angle may be up to 10 or 15 degrees deviating from a vertical orientation normal to the top side of the chassis 100.

In the suspension arrangement 200 of the present invention, the elongate pressure vessel 50 is only suspended at its axial ends 51, 52. That is, no further mounts, such as strap mounts, or other support elements are included or needed to suspend the elongate pressure vessel. By only suspending the elongate pressure vessel 50 at its axial ends 51, 52, the elongate pressure vessel is free to radially expand and contract in response to internal pressure variations inside the vessel over time, e.g. to allow "breathing" of the pressure vessel. Each axial end 51, 52 may be provided with a boss end, to facilitate the connection between the elongate pressure vessel and the neck mounts 210, 220.

FIG. 1 further illustrates that one or more further elongate pressure vessels 50' may be suspended on lateral sides of the truck, e.g. in a so called "chassis tank" configuration. This configuration can be applied independently from the "cabin backpack" configuration, in that the truck can be equipped with either one of these configurations, or both. It should be clear that other configurations for suspending pressure vessels can be envisioned too, as well as other locations on the truck.

As illustrated in FIG. 1, in the "chassis tank" configuration of the suspension arrangement 200 the first and second neck mount 210, 220 extend from a lateral side of the chassis 100 between the front and rear axle of the truck, e.g. by means of brackets extending laterally from the pair of longitudinal chassis members 101, 102. The first and second neck mount 210, 220 may be arranged for suspending the elongate pressure vessel 50' in a substantially level or horizontal orientation to the chassis, alongside the longitudinal chassis members 101, 102.

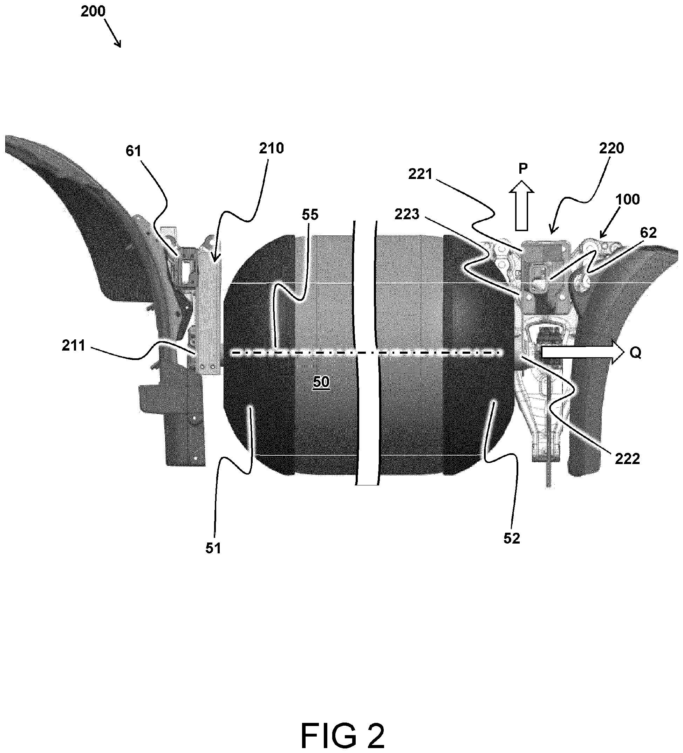

An embodiment of the "chassis tank" configuration is illustrated in FIG. 2. Here, the suspension arrangement 200 comprises a first and second neck mount 210, 220 mounted to axial ends 51, 52 of an elongate pressure vessel 50. The pressure vessel is mounted in a substantially horizontal orientation to the chassis 100 in the space between the front and rear axle of the truck, e.g. behind a front wheel mudguard and in front of a rear wheel mudguard.

The second neck mount 220 is formed by a flex plate assembly 220 comprising a chassis mount 221 fixated to the chassis 100, e.g. via bracket 62. In other words, the flex plate assembly 220 may comprise a bracket 62 that extends between the chassis 100 and the chassis mount 221, e.g. for suspending the second axial end 52 of the elongate pressure vessel at a lateral offset from the chassis 100. The flex plate assembly 220 further includes a vessel mount 222, fixated to the second axial end 52 of the elongate pressure vessel 50, e.g. via a boss end that axially extends from the elongate pressure vessel 50. The vessel mount 222 is movably coupled to the chassis mount 221 by at least one flex plate 223.

The at least one flex plate 223 has a flexibility in an out-of-plane direction Q for allowing an out-of-plane translation and tilting of the vessel mount 222 with respect to the chassis mount 221, and a stiffness in an in-plane direction P for constraining in-plane translations of the vessel mount 222 with respect to the chassis mount 221, and a rotation about an axial direction of the elongate pressure vessel, e.g. about an axial centerline 55 of the pressure vessel 50.

The first neck mount 210 at the opposing first axial end 51 of the pressure vessel 50 is formed by a ball joint 211, e.g. spherical joint, arranged for constraining the first axial end 51 of the elongate pressure vessel to prevent translations in three orthogonal directions and to allow rotations about the three orthogonal directions. In other words, the first axial end 51 is allowed to freely rotate or tilt in any direction and at the same time, while displacements in any direction of the first axial end 51 are prevented.

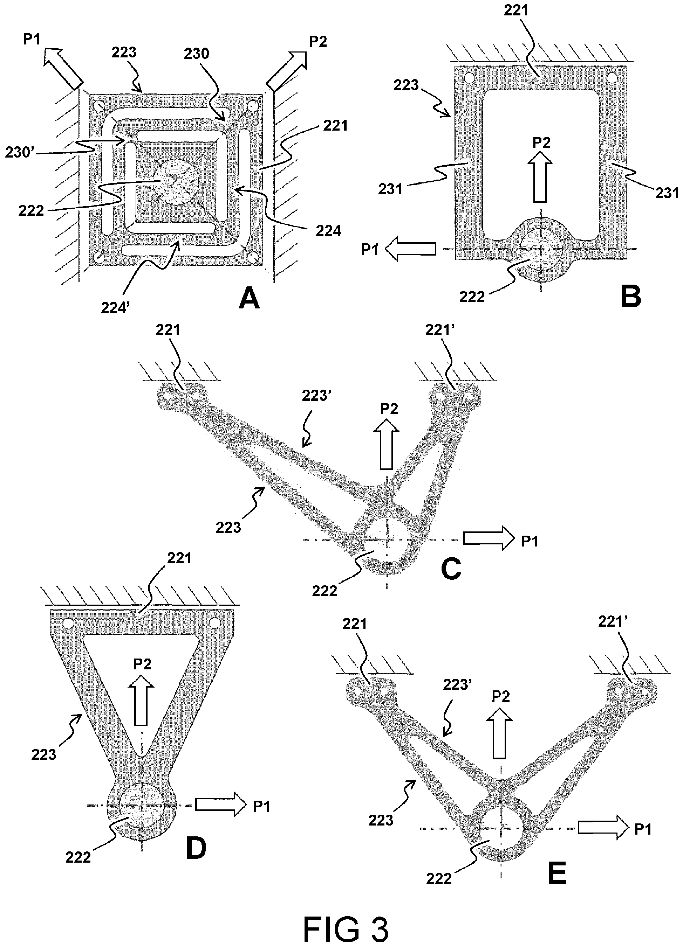

A number of different variants of the flex plate assembly 220 are shown in FIGs. 3A-3E, each having a different flex plate geometry that is able to cope with relatively large out-of-plane deflections, e.g. bending deflections, at acceptable material stress levels. FIG. 3A illustrates a concentric variant in which the flex plate assembly 220 comprises a chassis mount 221 that circumferentially extends around the vessel mount 222, and the at least one flex plate 223 extends radially between the central vessel mount 222 and the circumferential chassis mount 221. The flex plate 223 comprises flexible hinges 230, 230' and interconnected beams defined by a cutout pattern in the flex plate 223 forming perpendicularly aligned interconnective flex plate beams 224, 224' that are opposingly connected with each other in these flexible hinges 230, 230', to increase the flexibility of the flex plate in the out-of-plane direction. In the in-plane direction, the stiffness of the flex plate 223 is maintained since the hinge axes of the flexible hinges 230 and 230' are aligned with a first and second in-plane stiffness direction P1, P2 whilst allowing for unhindered out-of-plane rotation along these rotation axis P1 and P2. The relative alignment between the bendable flex plate beams 224 and 224' provides for a high in-plane rotational fixation of the central vessel mount 222.

FIG. 3B illustrates an offset variant with a rectangular shape, having a central cutout that defines two branches 231 of the flex plate 223. The chassis mount 221 of the flex plate assembly 220 is at an offset from the vessel mount 222, and the two branches 231 of the at least one flex plate 223 unilaterally extend between the chassis mount 221 and the vessel mount 222, e.g. parallel to each other. Consequently a first and second in-plane stiffness direction P1, P2 is provided whilst allowing for unhindered out-of-plane rotation along these rotation axis P1 and P2.

FIGs. 3C, 3D, and 3E illustrate other offset variants, having a triangular shape. The variants of FIG. 3C and 3E have two legs 223, 223' per triangular branch that extend separately between the vessel mount 222 and respective chassis mounts 221, 221'. FIG. 3C illustrates an asymmetric design in which the legs 223, 223' have different lengths, so that the vessel mount 222 is shifted towards one of the respective chassis mounts 221'. In contrast, the variant of FIG. 3E is more symmetrical in that the legs 232 are of equal length and the vessel mount 222 is located centrally between the two respective chassis mounts 221, 221'. The symmetric variant of FIG. 3D has a central triangular cutout that defines two branches that converge from a common chassis mount 221 to a central vessel mount 222 at a unilateral offset from the chassis mount 221.

Each of the flex plate assemblies depicted in FIGs 3A-3E have an in-plane stiffness in two directions P1, P2 to constrain in-plane translations and rotation of the vessel mount 222 with respect to the chassis mount 221, and an out-of-plate flexibility to allow out of plane translation and rotations of the vessel mount 222 with respect to the chassis mount 221.

Besides the examples shown in FIG. 3A-E, other configurations of the flex plate assembly can be envisioned with different flex plate geometries. For example, instead of rectangular or triangular shapes, the flex plate assembly can have a circular shape, hexagonal shape, linear shape, or any other shape.

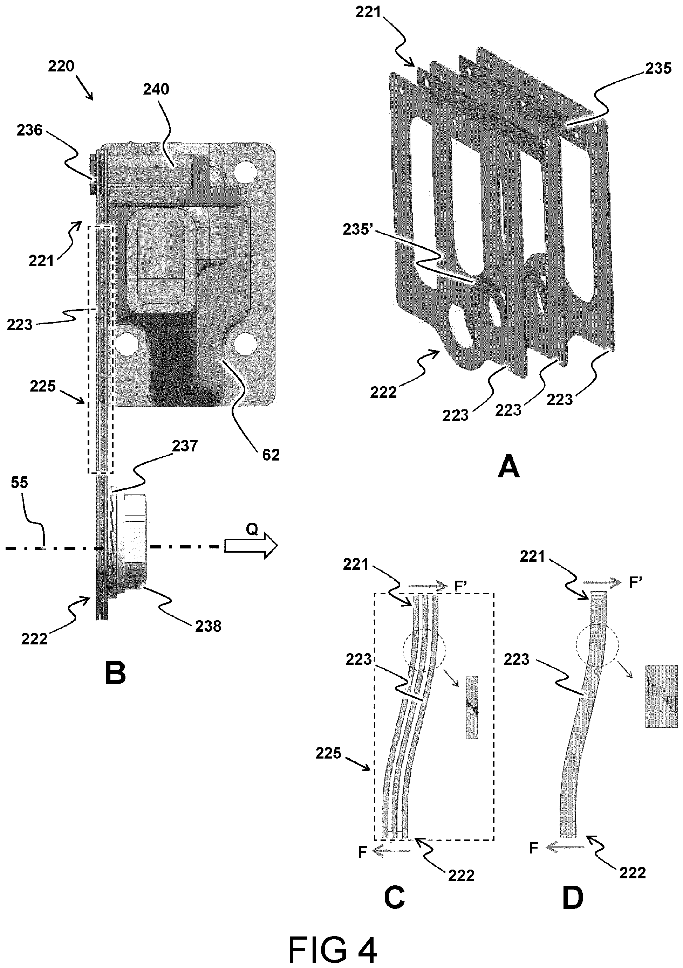

FIGs. 4A and 4B illustrate an embodiment of a multilayer flex plate assembly 220 comprising three flex plates 223 that are stacked in the out-of-plane direction Q. Instead of three flex plates 223, the flex plate assembly may comprise two, four, five or six flex plates 223, or more. The at least two flex plates 223 are connected to each other by means of intermediate spacers 235, 235' at the chassis mount 221 and at the vessel mount 222. The individual flex plates 223 are separated from each other in a free standing section 225 between the chassis and vessel mount, so that the flex plates 223 are free to move with respect to each other when bent out-of-plane, e.g. as in a parallelogram mechanism. The at least two flex plates 223 may be identical, e.g. having the same size and shape, and having the same thickness. Accordingly, stresses that occur during out-of-plane movement are equally divided over the flex plates 231 in the multilayer flex plate assembly, as illustrated in FIG. 4C. In comparison with FIG. 4D, where only a single flex plate 223, but having a thickness that is equal to the sum of thicknesses as depicted in the stacked multi-layer assembly of FIG. 4C, is mounted between the chassis mount 221 and the vessel mount 222, the flex plates 223 in the multilayer flex plate assembly illustrated in FIG. 4C have a decreased thickness. As a result, the bending stresses that occur in the free standing section 225 of the multiple individual thin flex plates 223 are smaller than the bending stress in the relatively thicker single flex plate of FIG. 4D whilst keeping the same in-plane strength and stiffness the thick single flex of the embodiment of FIG. 4D.

As illustrated in FIG. 4B, the vessel mount 222 may comprise a retaining ring 237 for constraining a rotation of the elongate pressure vessel about its central axis, e.g. about the axial direction 55 of the elongate pressure vessel. The retaining ring 237 may be secured by tightening a nut 238, which may also serve to couple the vessel mount 222 to the axial end of the elongate pressure vessel, e.g. to a boss end, and/or to clamp the stack of flex plates 223 at the vessel mount 222.

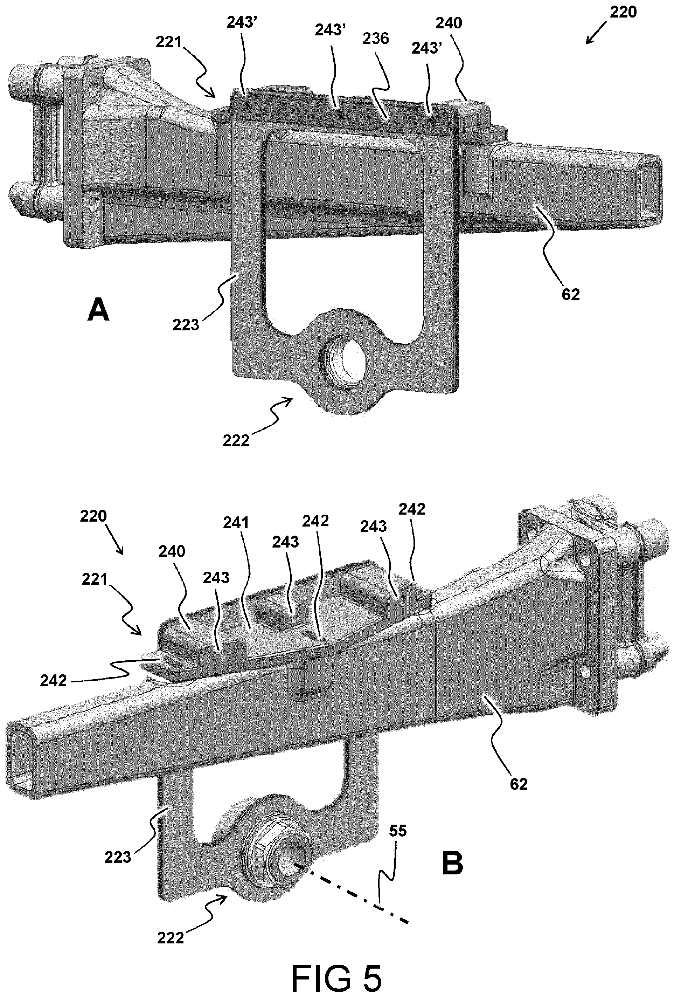

The individual flex plates 223 may be interconnected by means of screws that extend through holes 243', see FIG 5A, in the flex plates and intermediate spacers, and into an adjustment mechanism 240 that may be part of or attached to the chassis mount 221 between the stack of flex plates 223 and the bracket 61. To avoid local stress concentrations in the flex plates 223 due to the screw connection, a reinforcement plate 236 may be applied between the heads of the screws and the outermost flex plate 223. Preferably, the reinforcement plate 236 has a thickness that is at least a factor two or three larger than the flex plate thickness. Such a reinforcement plate 236 can also be applied at the vessel mount 222.

The adjustment mechanism 240 is further illustrated in FIG. 5A and 5B. The adjustment mechanism 240 may comprise a body 241 with a number of threaded holes 243 in which screws can be fastened in order to clamp the one or more flex plates 223 at the chassis mount 221. The adjustment mechanism 240 itself is mounted to the bracket 62 by screwing one or more screws into threaded holes in the bracket 62, through elongate adjustment slots 242 in the adjustment mechanism 240. The adjustment slots 242 are elongated in the axial direction 55 of the pressure vessel, and allow the adjustment mechanism 140 to slide with respect to the bracket 62 before the screws are tightened. In this way, the distance between the second neck mount 220, i.e. the flex plate assembly, and the first neck mount 210, i.e. the ball joint, can be adjusted in the axial direction 55 of the elongate pressure vessel, e.g. to compensate for tank length production tolerances and in-vehicle assembly tolerances of the tank suspension arrangement 200.

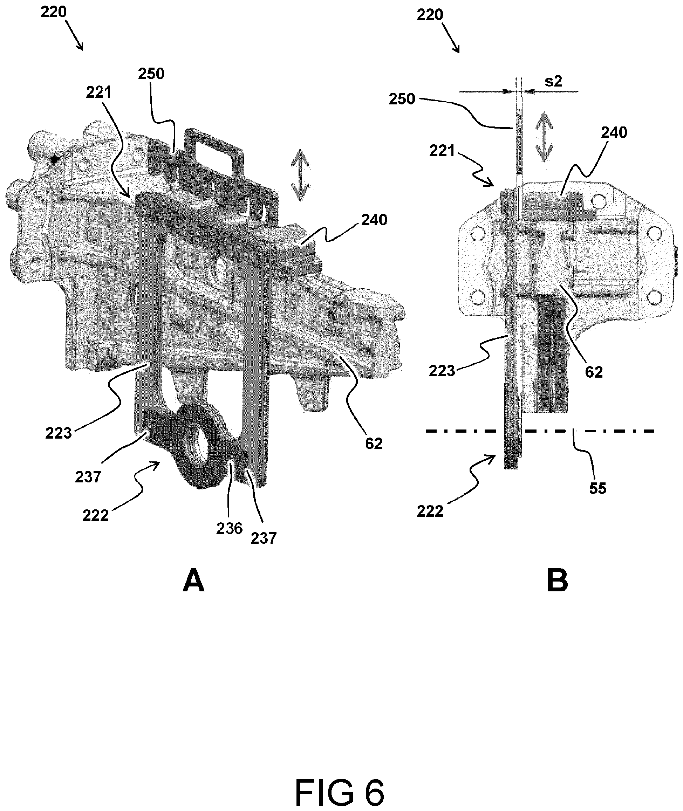

FIG. 6 illustrates another or further embodiment of the second neck mount 220, comprising a multilayer flex plate. At the vessel mount 222 of the flex plate mechanism, an extended reinforcement plate 236, e.g. underlay plate, is mounted to the flex plates 223 to reduce local material stress hot spots. This reinforcement plate is fixated to and extending across a side of the at least one flex plate that faces the second neck mount, wherein the reinforcement plate is arranged for locally reinforcing the at least one flex plate at or near the coupling to the elongate pressure vessel. The reinforcement plate, e.g. underlay plate, effectively transfers suspensions forces between the flex plate assembly and the elongate pressure vessel while distributing stresses over an increased area of the at least one flex plate, to prevent local stress concentrations and to reduce the maximum stress level in the at least one flex plate. The opposing outer ends of the extended reinforcement plates are interconnected in axial out-of-plane direction 55 with each other via bolts 237 effectively compressing the bottom base of the rectangular multi-layer flex plate stack. At the chassis mount 221, an assembly aid 250 is mounted between the flex plates 223 and the adjustment mechanism 240. The assembly aid is arranged for middling the initial position of the flex plates when suspending an elongate pressure vessel. For example, the elongate pressure vessel may have an internal pressure varying between 0 and 900 bar. As a result, the elongate pressure vessel may expand and contract over a total distance S1 in the axial direction 55. The assembly aid 250 has a thickness s2 that corresponds with a part of the total distance S1, preferably 40-60% of the total distance S1. By using the assembly aid, the suspension arrangement can be set in an initial position in which the distance between the first and second neck mount matches an axial length of an elongate pressure vessel at atmospheric internal pressure such that the tank system can mounted in an axial tension-free condition wherein the flex plate is not bent yet, but after removal of the assembly aid, which was positioned between the flex plate 223 and the adjustment mechanism 240, the flex plate can easily be pre-tensioned to a pulling bent state that corresponds to approximately half of the total pressure related expansion stroke S1 of the tank via fastening of the axially oriented second bolts that tighten the flex plate to the chassis mount 221. This mounting process may comprise the following two fixation steps. In a first step, by placing the mounting aid between the chassis mount and the flex plate, and subsequently letting the adjustment mechanism rest onto the chassis bracket 62 the distance between the second neck mount and the first neck mount via fixation of the longitudinal slots with its corresponding first bolts can be adjusted. In this manner the second neck mount and the corresponding chassis mount is already positioned to the chassis at a pre-set distance between the flex plate and the chassis mount whilst the flex plate is in a non-bent neutral flat state before the elongate pressure vessel is mounted and pressurized. As a result of this first step the tank production tolerances and in-vehicle assembly tolerances are compensated, avoiding cumbersome adjustment of the chassis bracket 62 to the chassis 100 which reduces the vehicle manufacturing process time. In a second step, the assembly aid is subsequently removed between the flex plate and chassis mount, and the second bolts are tightened in axial direction to the chassis mount, effectively forcing the flex plate in its S-shape bent second position, e.g. corresponding to an empty or non-pressurized tank condition. Accordingly, the flex plate assembly can be arranged to exert a tensile force on the second axial end when said atmospheric elongate pressure vessel is suspended in the suspension arrangement. Subsequently, when the suspended elongate pressure vessel is filled up with fuel and pressurized to a desired working pressure, e.g. up to 900 bar, the axial extension of the elongate pressure vessel may cause the tensile force to reduce to zero, e.g. at approximately half the maximum working pressure, and the flex plate assembly may instead exert a compression force on the second axial end of the pressure vessel once the maximum working pressure is reached. In this way, the maximum deflection of the flex plate assembly can be minimized, in order to reduce peak bending stresses in the flex plate(s).

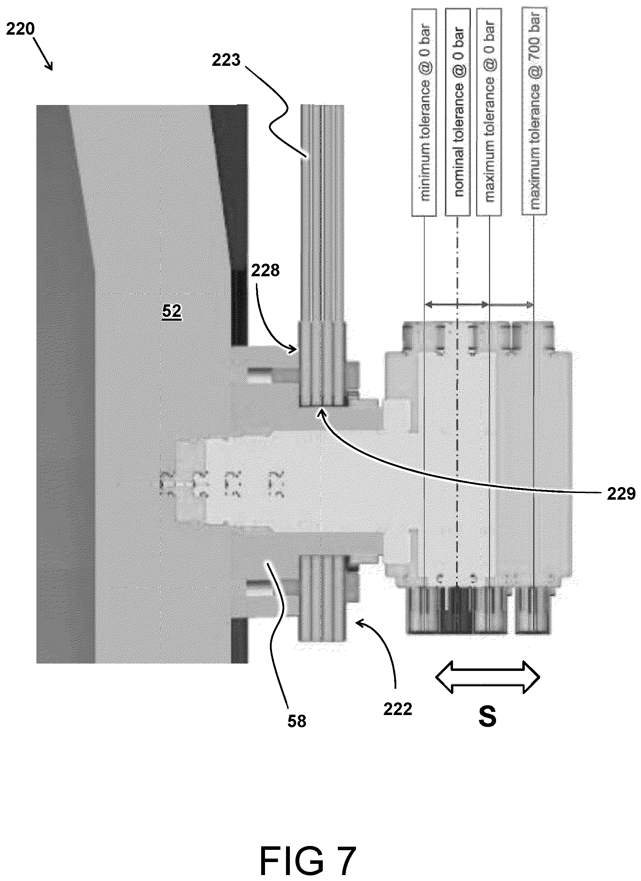

FIG. 7 illustrates an embodiment of the second neck mount 220, in particular how the flex plate assembly can be aligned with and connected to the second axial end 52 of the elongate pressure vessel. As illustrated the vessel mount 222 is arranged for coupling a multi-layer flex plate 223 to a boss end 58 that extends from the second axial end 52. The vessel mount 222 comprises an alignment surface 229 configured to align with an outer contour of the boss end, and a mounting surface 228 configured to abut an axial end face of the boss end. The alignment surface 229 may be formed by a cutout in the flex plate(s) 223 having a size and shape that corresponds with a size and shape of an outer contour of the boss end 58. In this way, the vessel mount 222 can be aligned with the boss end 58. The mounting surface 228 may be formed directly by one of the flex plates, or by a reinforcement that is positioned between the boss end 58 and the flex plate(s) 223. The vessel mount 222 may be fixated to the boss end 58 by means of screws, e.g. at a pitch circle with a diameter typically ranging between 60 and 120 mm with for instance 8 × M6 or 6 × M12 or any other bolt configuration that provides sufficient strength to transmit the dynamic peak torques, which may rise up to values of 3000 to 4000 Nm, for fixation of the tank along its axial centerline, as illustrated in FIG. 7. A valve system can be provided on a side of the at least one flex plate facing away from the second axial end 52 of the elongate pressure vessel. By illustration four valve positions are shown to demonstrate the stroke S that needs preferably to be accommodated by the flex plate assembly 220 as depicted in FIG 6. The stroke S includes amongst others the following axial positions ranging from minimum to maximum according neck mount-to neck mount axial tank length dimensions:
▪ Minimum production tolerance of the axial length of the elongate pressure vessel, in empty condition (0-40 bar) of the vessel
▪ Nominal axial length of the vessel, in empty condition (0-40 bar)
▪ Maximum production tolerance of the axial length, in empty condition (0-40 bar) of the vessel
▪ Maximum production tolerance of the axial length, at maximum working pressure (700 - 900 bar) of the vessel

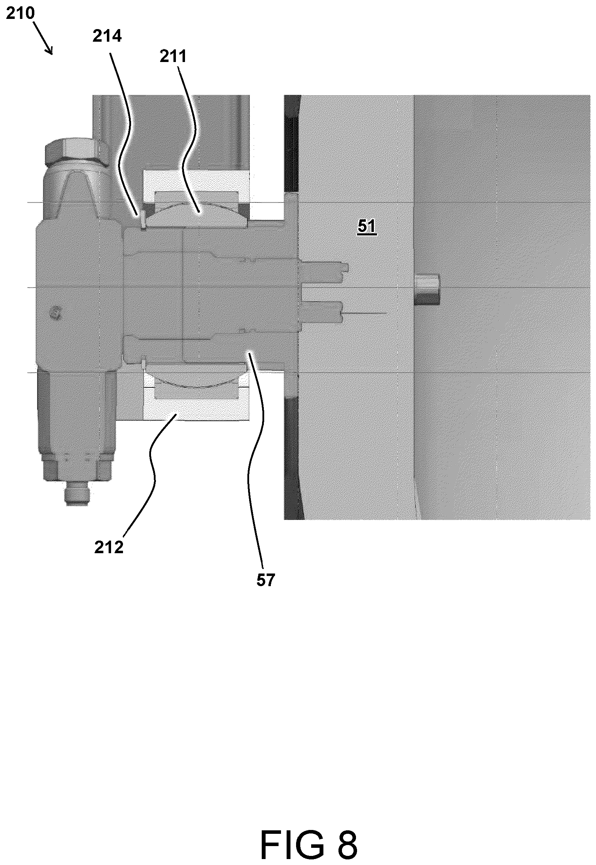

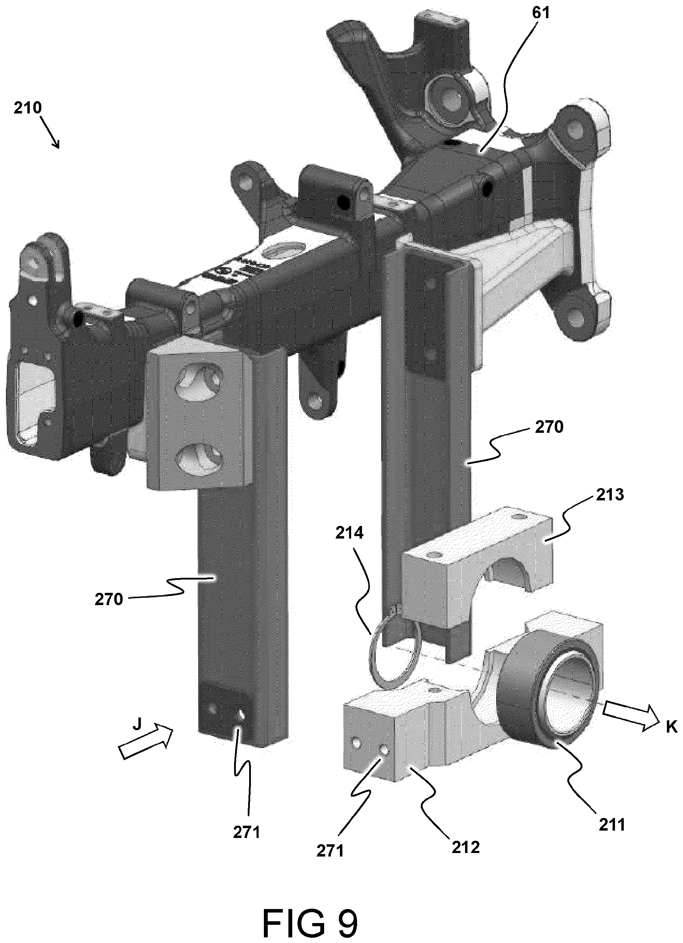

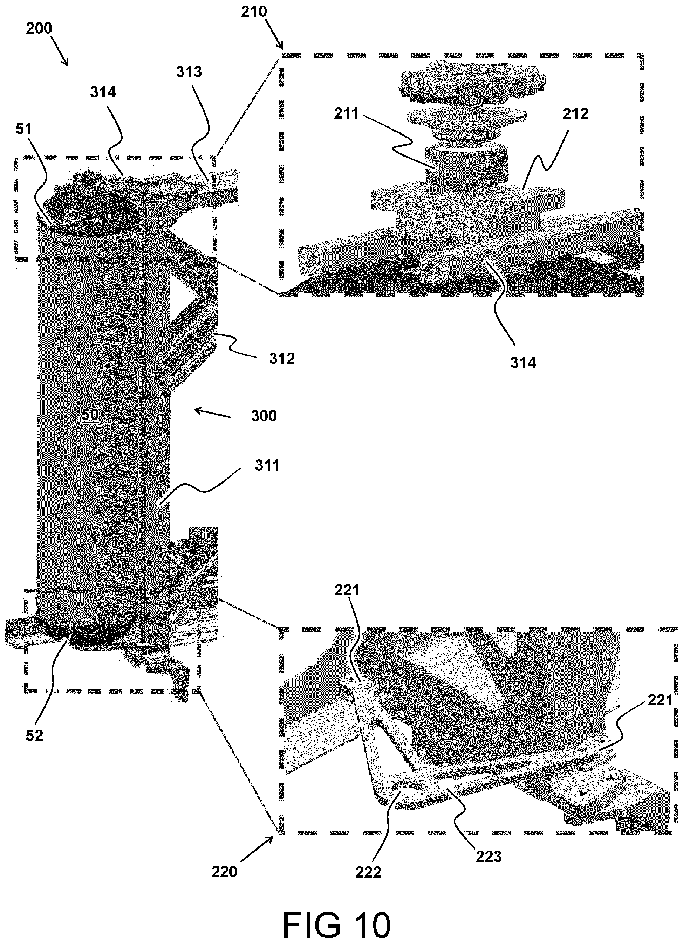

FIG. 8 illustrates an embodiment of the first neck mount 210 of the suspension arrangement. The ball joint 211 is mounted directly to a boss end 57 that extends from the first axial end 51 of the pressure vessel. The ball joint 211 may be enclosed in a ball joint housing 212 which is rigidly fixed to the chassis, either directly mounted to one of the chassis members 101 or 102, or indirectly via a chassis bracket system (see e.g. FIG 9) or a subframe system being placed on both chassis members 101, 102 (see e.g. FIG 10). An inlet port and/or valve system can be provided on the side of the ball joint 211 opposite to the first axial end 51 of the elongate pressure vessel. The ball joint is axially retained, e.g. via circlip 214. Alternatively, a big nut (with screwing thread on the boss end) or even a press fitting may be considered.

FIG. 9 illustrates another or further embodiment of the first neck mount 210, comprising a bracket 61 that laterally extends from the chassis of the truck, and a parallelogram based collapse structure 270 between the bracket 61 and the ball joint 211 that provides for a four link mechanism to guide the pressure vessel, e.g. towards a chassis end stop (not shown), in case of a side impact vehicle crash. The collapse structure 270 has a stiffness in an out-of-plane direction K for constraining an out-of-plane translation of the ball joint 211 with respect to the chassis. The collapse structure 270 is collapsible in an in-plane direction J for absorbing an impact force on the elongate pressure vessel with the objective to limit the peak force acting in radial direction on the boss end and thus providing protection against overload of the boss end and rupture of the tank.

The ball joint 211 may comprise an inner ring, e.g. bearing stud, and an outer ring, e.g. socket enclosed in a casing or housing. The outer ring may be static in that it is rigidly mounted to the chassis, e.g. via the collapse structure 270 and the bracket 61. The outer ring encloses an inner ring which is rotatable in three orthogonal degrees of freedom with respect to the outer ring. The inner ring is mountable to the first axial end 51 of the elongate pressure vessel, e.g. to a boss end extending therefrom. In order to facilitate mounting the ball joint 211 to the collapse structure 270, the outer ring may be mounted in a cavity of a ball joint housing 212, 213 that form-fittingly encloses the outer ring of the ball joint 211. A first wall section of the cavity may be formed by a first part of the ball joint housing 212, and a second wall section of the cavity may be formed by a second part of the ball joint housing 213. The ball joint housing 212, 213 is mountable to the collapse structure 270 via bolts 271.The rectangular shaped parallelogram based collapse structure is thus formed by the two vertical U-beam legs 220 and the bolted interconnecting ball joint housing 212.

It is noted that this particular collapse structure first neck mount design 210 design according to FIG 9 can advantageously be combined with a offset rectangular flex plate based second neck mount design according to anyone of the embodiments as given in FIGs. 2, 3B, 4, 5 and 6 as these particular (multi-layer) flex plate 223 geometries may form a similar collapse structure as the bracket system of FIG 9. During a vehicle side impact crash the rectangular flex plate can be designed to buckle at a predefined collapse threshold, typically at lateral neck mount forces ranging between 40 and 80 kN. Once the flex plate buckles the peak forces acting in radial direction on the boss end are limited and thus a protection against overload of the boss end and rupture of the tank is provided. Furthermore, the rectangular flex plate provides for a four link mechanism that guides the pressure vessel towards a chassis end stop (not shown) in case of a side impact vehicle crash. In this respect the rounded corners of the rectangular inner cutout of the flex plate can serve as plastic hinges defining the kinematic parallelogram mechanism.

FIG. 10 illustrates the "cabin backpack" configuration of the suspension arrangement, which was mentioned earlier in the present disclosure with reference to FIG. 1. In particular the "cabin backpack" is advantageously construed by a stiff upstanding subframe 300 being placed on top of the two elongate chassis members 101, 102 as shown FIG. 1. The backpack frame 300 may comprise two stable A-pillars 311 being interconnected with each other by multiple reinforcement cross beams 312 and a top beam 313. In this embodiment, the first and second neck mounts 210, 220 are part of a vessel mount structure that extends from a top side of the chassis between a cabin and a trailer of the truck. The first neck mount is positioned at one of the top corners of the subframe 300, e.g. via a fork shaped casted bracket 314 that supports a ball bearing housing 212 (similar concept as described in FIGs. 8 and 9). As illustrated in FIG. 10, the first and second neck mount 210, 220 suspend the elongate pressure vessel 50 in a substantially upright, e.g. vertical, orientation. In this configuration, the first and second neck mount 210, 220 may comprise any of the features described herein, either alone or in combination. In accordance with the invention, the first neck mount 210 comprises a ball joint 211, and the second neck mount 220 comprises a flex plate assembly, comprising a vessel mount 222, a chassis mount 221, and at least one flex plate 223 connecting the vessel mount to the chassis mount and providing an in-plane stiffness while allowing out-of-plane movement of the vessel mount 222 with respect to the chassis mount 221.

It will be clear to the skilled person that the invention is not limited to any specific embodiment herein described and that combinations or modifications are possible, in as far as these can be considered within the scope of the appended claims. Also kinematic inversions are considered inherent to the invention disclosed herein. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck, comprising a chassis that includes a pair of longitudinal chassis members that extend between a front axle and a rear axle of the truck, and a suspension arrangement for suspending an elongate pressure vessel to the chassis, the suspension arrangement comprising:
- a first neck mount, fixedly connected to the chassis and arranged for mounting to a first axial end of the elongate pressure vessel;
- a second neck mount, movably connected to the chassis at a distance from the first neck mount, and arranged for mounting to a second axial end of the elongate pressure vessel;
wherein the second neck mount is formed by a flex plate assembly comprising a chassis mount fixated to the chassis, and a vessel mount arranged for fixating to the second axial end of the elongate pressure vessel, wherein the vessel mount is movably coupled to the chassis mount by at least one flex plate; wherein the at least one flex plate has a flexibility in an out-of-plane direction for allowing an out-of-plane translation and tilting of the vessel mount with respect to the chassis mount, and a rigidity in at least two in-plane directions for constraining in-plane translations of the vessel mount with respect to the chassis mount, and a rotation about an axial direction of the elongate pressure vessel; and
wherein the first neck mount is arranged for constraining translations and allowing rotations of the first axial end of the elongate pressure vessel with respect to the chassis.

2. The truck according to claim 1, wherein the first neck mount comprises a ball joint for constraining said translations and allowing said rotations of the first axial end with respect to the chassis.

3. The truck according to claim 1 or 2, wherein the at least one flex plate allows an out-of-plane translation with a range of movement of at least 15 millimeter, preferably at least 20 millimeter.

4. The truck according to any preceding claim, wherein the flex plate assembly comprises at least two flex plates extending separately between the chassis mount and the vessel mount.

5. The truck according to claim 4, wherein the at least two flex plates are stacked or spaced apart in the out-of-plane direction.

6. The truck according to any preceding claim, wherein the at least one flex plate comprises one or more flexible hinges and interconnected beams defined by a cutout pattern in the flex plate, wherein the one or more flexible hinges and interconnected beams are arranged for providing the flexibility for allowing the out-of-plane tilting of the vessel mount with respect to the chassis mount.

7. The truck according to any preceding claim, wherein the chassis mount comprises an adjustment mechanism for adjustably mounting the flex plate assembly to the chassis, wherein the adjustment mechanism is arranged for adjusting a distance between the second neck mount and the first neck mount in the axial direction of the elongate pressure vessel, wherein preferably the adjustment mechanism comprises a body provided with one or more slotted holes extending in axial direction of the elongate pressure vessel for mounting to the chassis by means of a bolt connection, wherein the one or more slotted holes are arranged for allowing positioning of the body with respect to the chassis when the bolt connection is loose.

8. The truck according to any preceding claim, wherein the vessel mount comprises a reinforcement plate fixated to and extending across a side of the at least one flex plate that faces the first neck mount, wherein the reinforcement plate is arranged for locally reinforcing the at least one flex plate at or near the coupling to the elongate pressure vessel.

9. The truck according to any preceding claim, wherein the at least one flex plate unilaterally extends between the chassis mount and the vessel mount, wherein the chassis mount is provided at a first edge of the flex plate, and wherein the vessel mount is provided at a second edge of the flex plate opposite the first edge.

10. The truck according to any preceding claim, wherein the at least one flex plate radially extends between the vessel mount and the chassis mount, wherein the vessel mount is provided at a central portion of the at least one flex plate, and wherein the chassis mount is at least provided at two opposing edges of the at least one flex plate.

11. The truck according to any preceding claim, wherein the first and second neck mounts are part of a vessel mount structure that extends from a top side of the chassis between a cabin and a trailer of the truck, wherein the first and second neck mount are arranged for suspending the elongate pressure vessel in a substantially upright orientation, wherein preferably the first and second neck mount are tilted with respect to the top side of the chassis for suspending the elongate pressure vessel at a forward inclination in the driving direction of the truck.

12. The truck according to any preceding claim, wherein the first and second neck mount extend from a lateral side of the chassis between the front and rear axle of the truck, wherein the first and second neck mounts are arranged for suspending the elongate pressure vessel to the chassis in a substantially level orientation.

13. The truck according to any preceding claim, wherein, at the second neck mount, the at least one flex plate has a rectangular outer contour and a rectangular central cutout, wherein the at least one flex plate forms a four-bar-mechanism with plastically deformable hinges that unilaterally extends between the chassis mount and the vessel mount, and wherein the first neck mount comprises a collapse structure, wherein the collapse structure has a stiffness in an out-of-plane direction for constraining an out-of-plane translation with respect to the chassis, and wherein the collapse structure is collapsible in an in-plane direction for absorbing an impact force on the elongate pressure vessel and guiding the vessel towards one or more chassis sided end stops over a pre-defined trajectory.

14. The truck according to any preceding claim, wherein the suspension arrangement has an initial position in which a distance between the first and second neck mount is adapted to match an axial length of an elongate pressure vessel with atmospheric internal pressure, wherein, in the initial position, the flex plate assembly exerts a pull force on the second axial end when said atmospheric elongate pressure vessel is suspended in the suspension arrangement.

15. Method for suspending an elongate pressure vessel in the truck according to claim 14, the method comprising:
- mounting an assembly aid between the at least one flex plate and the adjustment mechanism, wherein a thickness of the assembly aid forms a gap between the at least one flex plate and the adjustment mechanism that corresponds with a part of a translational stroke of the vessel mount relative to the chassis mount in the out-of-plane direction;
- using the adjustment mechanism to set the flex plate assembly in an initial position, in which a distance between the first and second neck mount matches an axial length of an elongate pressure vessel at atmospheric internal pressure and in which the flex plate is in an unbent state;
- fixating the adjustment mechanism;
- removing the assembly aid and mounting the at least one flex plate directly to the fixated adjustment mechanism in axial direction of the elongated pressure vessel, for thereby setting the flex plate assembly in a pre-tensioned state, in which the at least one flex plate is in a bent state that exerts a tension force on the elongate pressure vessel.
